Europäisches Patentamt

European Patent Office

Office européen des brevets

(19)

(11) Publication number: **0 083 314**
**B1**

(12) **EUROPEAN PATENT SPECIFICATION**

(45) Date of publication of patent specification: **28.05.86**

(51) Int. Cl.⁴: **B 23 Q 39/04,** B 23 Q 5/34

(21) Application number: **82810570.0**

(22) Date of filing: **29.12.82**

(54) **Mechanism for direct transmission of feeds to the operating units of rotary table machines.**

(30) Priority: **30.12.81 CH 8347/81**

(43) Date of publication of application:
**06.07.83 Bulletin 83/27**

(45) Publication of the grant of the patent:
**28.05.86 Bulletin 86/22**

(84) Designated Contracting States:
**AT BE DE FR GB IT LU NL SE**

(56) References cited:
**CH-A- 240 646**
**CH-A- 372 534**
**DE-A-1 903 173**
**DE-B-1 258 707**
**DE-B-1 477 644**
**GB-A- 861 847**
**GB-A- 918 231**
**US-A-3 371 564**

(73) Proprietor: **Azypatent AG**
**FL-9490 Vaduz (LI)**

(72) Inventor: **Michelangelo, Gippa**
**c/o Dr. Arno Ballinari Corso San Gottardo 12**
**CH-6830 Chiasso (CH)**

(74) Representative: **Baggiolini, Raimondo et al**
**Racheli & Fiammenghi Via San Gottardo 15**
**CH-6900 Lugano (CH)**

Courier Press, Leamington Spa, England.

# Description

This invention is related to a mechanism for direct transmission of feeds to the operating units of rotary table machines with a central cogwheel placed around the periphery of said rotary table and coaxial with it, and rotably supported by the central support that supports the rotary table itself and for each operating unit a gear meshing with said cogwheel to provide a possibility of angular positioning. Such a mechanism is known from US—A—3371564.

In this known system the mechanism is mechanically synchronized with respect to the operating units while giving the operating units a positioning flexibility equal to that in operating units having independent controls (hydraulic, pneumatic or electric).

The mechanism of the present invention provides an alternative solution to the same problem. The solution is given in the characterizing part of claim 1.

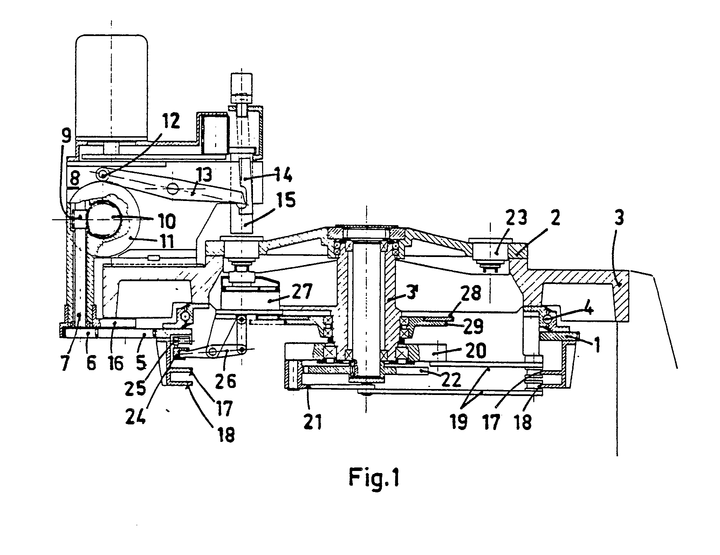

Figure 1 shows, in axial section, a preferred embodiment of this mechanism.

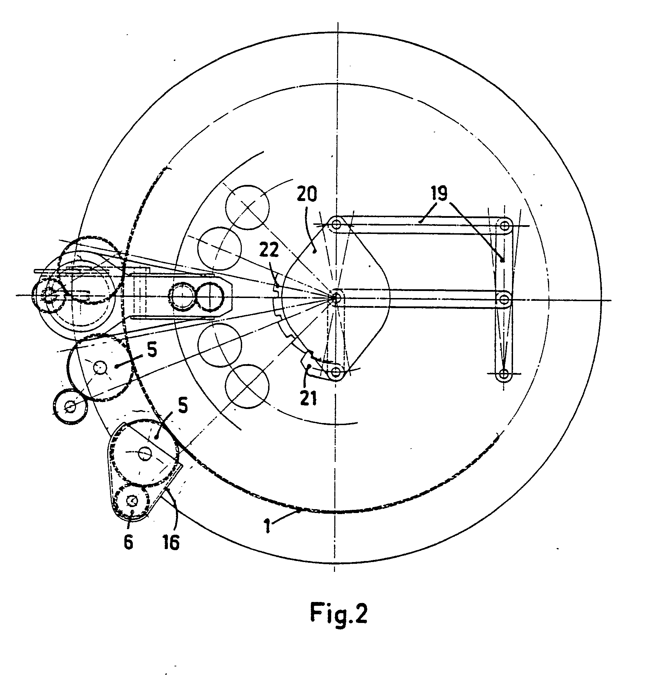

Figure 2 shows a partial cross section.

With reference to the figures:

The mechanism comprises a central cogwheel (1), placed on the periphery of rotary table (2) coaxial with it and connected to central support (3) that supports rotary table (2) by roller bearings (4).

Cogwheel 1 meshes with intermediate gear (5) which in turn meshes with planetary gear (6).

Planetary gear (6) is fastened to shaft (7) which in turn is journalled in frame (8) of the operating unit by roller bearings.

At its other end shaft (7) carries endless screw (9) that drives nut (10).

Nut (10) in turn is solid with cam (11) which, by roller (12) and levers (13—14), controls the feed of operating unit (15). Shaft of gear (5) is made solid with the frame by flange (16). This flange enables the axis of gear (5) to turn coaxially with shaft (7).

It is clear that this transmission system enables the support of operating unit (15) to move freely in radial sense with respect to central support (3) and therefore with respect to rotary table (2).

Actually gear (5) can mesh radially with both cogwheel (1) and planetary gear (6) regardless of the desired radial position of shaft (7) and therefore of operating unit (15) with respect to the piece-carrying body (23); it can mesh with cogwheel (1) and gear (6), gear (5) turning on axis of gear (6) by flange (16). Thus, transmission of the movement is obtained even if the operating unit has to operate off-center with respect to piece-carrying body (23).

The transmission ratio between cogwheel (1), planetary gear (6), endless screw (9) and companion gear (10) is selected so that one turn of cam (11) corresponds to one turn of the cogwheel (1).

In this way, the intermittent movement of rotary table (2) can be synchronously controlled by cams (17) and (18). This movement occurs through levers (19) that act on swinging body (20), pawl (21) and cogwheel (22), this latter being solid with the rotary table.

A lever arrangement (26) is further provided to control a device for rotating piece-carrying bodies (23), this lever arrangement (26) is always driven by cams solid with cog-wheel (1).

The device comprises a ring (24) that carries cams that rest on rollers (25) solid with cogwheel 1. Levers (26), which axially move the mechanism that causes the rotation of piece-carrying bodies (27), mesh in this ring.

Said mechanism for rotation of piece-carrying bodies receives the rotary movement from one or more cogwheels (28—29) fastened to the central support (3') by roller bearings.

# Claims

1. Mechanism for direct transmission of feeds to the operating units of rotary table machines with a central cogwheel (1) placed around the periphery of said rotary table (2) and coaxial with it, and rotably supported by the central support (3) that supports the rotary table (2) itself, and for each operating unit (15), a gear (5) meshing with said cogwheel (1) to provide a possibility of angular positioning, characterized by a planetary gear (6) meshing with the gear (5) and supported with the gear (5) by a flange (16) solid with the frame (8) that carries said operating unit (15), the frame (8) and consequently the axis of said planetary gear (6) and that of said gear (5) being angularly movable around an axis parallel to the axis of the rotary table (2), the frame (8) being translatable relative to the central support (3) so as to allow meshing of gear (5) and the cogwheel (1) irrespective of the angular position of frame (8), wherein the axial feed movements of each operating unit are obtained by providing the shaft (7) of said planetary gear (6) with an endless screw (9) driving a companion gear (10) coaxial and solid with a cam (11) that, by levers (13, 14), governs the axial movement of said operating unit (15).

2. Mechanism as in claim 1, wherein the transmission ratio between said cogwheel (1), planetary gear (6), endless screw (9) and companion gear (10), is selected so that a turn of the cam (11) corresponds to each turn of said cogwheel (1), causing the axial movement of said operating unit (15).

3. Mechanism as in claims 1 to 2, wherein the rotary movement of each piece-carrying body is imparted by a lever arrangement (26) that receives the movement from a ring (24) carrying said cams that act on bearings (25) solid with said cogwheel (1).

# Patentansprüche

1. Vorschubübertragungseinrichtung für die Bearbeitungseinheiten einer mit einem Drehtisch versehenen automatischen Maschine mit einem zentralen, um den Umfang des Drehtisches (2) herum und koaxial zu ihm plazierten Stirnrad (1), das durch eine zentrale, den Drehtisch (2) selbst abstützende Stütze (3) drehbar abgestützt ist, und einem mit dem Stirnrad (1) kämmenden, eine Winkelverstellung ermöglichendem Zahnrad (5) für jede Bearbeitungseinheit (15), gekennzeichnet durch ein mit dem Zahnrad (5) känmendes Umlaufrad (6), das mit dem Zahnrad (5) mittels eines mit dem die Bearbeitungseinheit (15) tragenden Rahmen (8) fest verbundenen Flansches (16) abgestützt ist, wobei der Rahmen (8) und damit die Achse des Umlaufrades (6) und die des Zahnrades (5) um eine zu der Achse des Drehtisches (2) parallele Achse winkelverstellbar sind, der Rahmen (8) zur zentralen Stütze (3) derart verfahrbar ist, daß unabhängig von der Winkelverstellung des Rahmens (8) das Zahnrad (5) und das Stirnrad (1) miteinander kämmen und wobei die axialen Vorschubbewegungen einer jeden Bearbeitungseinheit erhalten werden mit Hilfe einer an der Welle (7) des Umlaufrades (6) vorhandenen Schnecke (9), die ein mit einer Steuerscheibe koaxial und fest verbundenes, durch Hebel (13,14) die axiale Verschiebung der Bearbeitungseinheit (15) steuerndes Zahnrad (10) antreibt.

2. Vorschubübertragungseinrichtung nach Anspruch 1, wobei das Übertragungsverhältnis zwischen dem Stirnrad (1), dem Umlaufrad (6), der Schecke (9) und dem Zahnrad (10) derart gewählt ist, daß eine Drehung der Steuerscheibe (11) einer Drehung des Stirnrades (1) entspricht, was den axialen Vorschub der Bearbeitungseinheit (15) bewirkt.

3. Vorschubübertragungseinrichtung nach Anspruch 1 oder 2, wobei die Drehbewegung eines jeden Werkzeughalters mittels einer Hebelanordnung (26) bewirkt wird, die die Bewegung von einem ring (24) erhält, der die Steuerkörper trägt, die auf die mit dem Stirnrad (1) fest verbundenen Lager (25) wirken.

**Revendications**

1. Mécanisme pour la transmission de l'avance aux unités de travail de machines à table rotative avec roue dentée centrale (1) placée le long de la périphérie de la dite table rotative (2) et coaxiale à celle-ci en étant supportée en rotation par le support central (3) qui supporte la table rotative (2) elle-même et, pour chaque unité de travail (15), un pignon (5) engrenant avec ladite roue dentée (1) pour établir une possibilité de positionnement angulaire, caractérisé par un pignon planétaire (6) engrenant avec le pignon (5) et supporté avec le pignon (5) par une collerette (16) solidaire du châssis (8) qui porte ladite unité de travail (15), le châssis (8) et par conséquent l'axe dudit pignon planetaire (6) et celui dudit pignon (5) étant mobiles angulairement autour d'un axe parallèle à l'axe de la table rotative (2), le châssis (8), pouvant subir une translation par rapport au support central (3) de façon à permettre l'engrènement du pignon (5) et de la roue dentée (1) quelle que soit la position angulaire du châssis (8), les mouvements d'avance axiale de chaque unité de travail étant obtenus par le fait que l'arbre (7) dudit pignon planétaire (6) est muni d'une vis sans fin (9) entraînant un pignon associé (10) coaxial et solidaire d'une came (11) qui, par des leviers (13, 14) commande le mouvement axial de ladite unité de travail (15).

2. Mécanisme selon la revendication 1, dans lequel le rapport de transmission entre ladite roue dentée (1), le pignon planétaire (6), la vis sans fin (9) et le pignon associé (10) est choisi de façon qu'un tour de la came (11) corresponde à chaque tour de ladite roue dentée (1) en causant le mouvement axial de ladite unité de travail (15).

3. Mécanisme selon les revendications 1 à 2, dans lequel le mouvement de rotation de chaque corps porte-pièce est communiqué par un dispositif à leviers (26) qui reçoit le mouvement d'une couronne (24) portant lesdites cames qui agissent sur des paliers (25) solidaires de ladite roue dentée (1).

**Fig.1**

**Fig.2**

2